# FASCICULE DE BREVET EUROPEEN

(11) **EP 3 303 774 B1**
(45) Date de publication et mention de la délivrance du brevet: **01.05.2019**
(21) Numéro de dépôt: 16733638.7
(22) Date de dépôt: 27.05.2016
(51) Int. Cl.: F01D 9/02, F23R 3/06

(54) **PAROI ANNULAIRE DE CHAMBRE DE COMBUSTION A REFROIDISSEMENT OPTIMISE**
RINGFÖRMIGE WAND EINER BRENNKAMMER MIT OPTIMIERTER KÜHLUNG
ANNULAR WALL OF A COMBUSTION CHAMBER WITH OPTIMISED COOLING

(30) Priorité: 03.06.2015 FR 1555050
(43) Date de publication de la demande: 11.04.2018
(73) Titulaire: Safran Aircraft Engines, 75015 Paris (FR)
(72) Inventeur: COMMARET, Patrice, André, 77550 Moissy-Cramayel Cedex (FR); BUNEL, Jacques, Marcel, Arthur, 77550 Moissy-Cramayel Cedex (FR); LUNEL, Romain, Nicolas, 77550 Moissy-Cramayel Cedex (FR)
(74) Mandataire: Cabinet Beau de Loménie
(86) Numéro de dépôt international: PCT/FR2016/051263
(87) Numéro de publication internationale: WO 2016/193589

(56) Documents cités:
- EP-A1- 2 759 772
- WO-A2-2013/060987
- US-A1- 2015 107 798

## Description

### Arrière-plan de l'invention

La présente invention se rapporte au domaine général des chambres de combustion de turbomachine. Elle vise plus particulièrement une paroi annulaire pour chambre de combustion directe ou à flux inversé refroidie par un procédé dit de «multi-perforation».

Typiquement, une chambre de combustion annulaire de turbomachine est formée d'une paroi annulaire interne (dite aussi virole interne) et d'une paroi annulaire externe (dite aussi virole externe) qui sont reliées en amont par une paroi transversale formant le fond de chambre.

Les viroles interne et externe sont chacune pourvues d'une pluralité de trous et d'orifices d'admission d'air divers permettant à de l'air circulant autour de la chambre de combustion de pénétrer à l'intérieur de celle-ci.

Ainsi, des trous dits « primaires » et « de dilution » sont formés dans ces viroles pour acheminer de l'air à l'intérieur de la chambre de combustion. L'air empruntant les trous primaires contribue à créer un mélange air/carburant qui est brûlé dans la chambre, tandis que l'air provenant des trous de dilution est destiné à favoriser la dilution de ce même mélange air/carburant.

Les viroles interne et externe sont soumises aux températures élevées des gaz provenant de la combustion du mélange air/carburant.

Afin d'assurer leur refroidissement, des orifices supplémentaires dits de multi-perforation sont également percés au travers de ces viroles sur toute leur surface. Ces orifices de multi-perforation, inclinés en général à 60°, permettent à l'air circulant à l'extérieur de la chambre de pénétrer à l'intérieur de celle-ci en formant le long des viroles des films d'air de refroidissement.

Toutefois, en pratique, il a été constaté que la zone des viroles interne et externe qui est située autour et notamment directement en aval de chacun des trous primaires ou de dilution, du fait de la technologie de perçage laser utilisée, présente une absence d'orifices et bénéficie donc d'un faible niveau de refroidissement avec le risque de formation et de propagation de criques que cela implique.

Afin de résoudre ce problème, la demanderesse a proposé dans sa demande FR2982008 de réaliser, juste en aval des trous primaires ou des trous de dilution, des orifices additionnels de refroidissement disposés dans un plan perpendiculaire au sens d'écoulement des gaz de combustion. Toutefois, ces orifices additionnels dits giratoires (car à 90°), s'ils permettent d'assurer un refroidissement efficace par rapport à la classique multi-perforation axiale où le film d'air est stoppé par la présence de ces trous, présentent encore certains inconvénients du fait notamment qu'ils sont alimentés par la seule pression statique de l'air circulant autour de la chambre de combustion.

Le document EP 2 759 772 A1 divulgue encore une autre chambre de combustion avec des orifices de refroidissement.

### Objet et résumé de l'invention

La présente invention a donc pour but de pallier de tels inconvénients en proposant une paroi annulaire de chambre de combustion qui par un recours à la pression totale de l'air assure un meilleur refroidissement des zones susceptibles de voir apparaitre des amorces de criques et notamment celles situées directement en aval des trous primaires et de dilution.

A cet effet, il est prévu une paroi annulaire de chambre de combustion de turbomachine, comportant un côté froid et un côté chaud, ladite paroi annulaire comportant :
- une pluralité d'orifices d'admission d'air répartis selon au moins une rangée circonférentielle pour permettre à de l'air circulant dudit côté froid de pénétrer dudit côté chaud, lesdits orifices d'admission d'air créant autour d'eux des zones à fort gradient thermique, et
- une pluralité d'orifices de refroidissement pour permettre à l'air circulant dudit côté froid de pénétrer dudit côté chaud afin de former un film d'air de refroidissement le long de ladite paroi annulaire, lesdits orifices de refroidissement étant répartis selon une pluralité de rangées circonférentielles espacées axialement les unes des autres et les axes géométriques de chacun desdits orifices de refroidissement étant inclinés, dans une direction axiale D d'écoulement des gaz de combustion, d'un angle d'inclinaison θ1 par rapport à une normale N à ladite paroi annulaire,
ladite paroi annulaire étant caractérisée en ce qu'elle comporte en outre, dans lesdites zones à fort gradient thermique, des trous de multi-perforation coudés d'un angle α supérieur à 90°, ledit angle α étant pris entre un axe géométrique d'entrée Ae et un axe géométrique de sortie As dudit trou de multi-perforation, ledit axe géométrique de sortie dudit trou de multi-perforation étant incliné d'un angle θ3 par rapport à ladite normale N à ladite paroi annulaire au travers de laquelle lesdits trous de multi-perforation coudés sont percés, dans une direction dite de giration au plus perpendiculaire à ladite direction axiale D d'écoulement des gaz de combustion.

La présence de ces orifices de refroidissement coudés dans la paroi de la chambre de combustion de manière à ce qu'ils soient alimentés comme des trous de multi-perforation axiale côté froid tout en débouchant côté chaud comme des trous de multi-perforation giratoire, permet d'obtenir un refroidissement optimal avec le meilleur de la multi-perforation axiale classique comme de la multi-perforation giratoire.

Avantageusement, ledit angle α est compris entre 90° et 170° et ladite direction de giration est inclinée par rapport à ladite direction axiale D d'écoulement des gaz de combustion d'un angle β compris entre 50° et 90°.

De préférence, lesdits trous de multi-perforation présentent un diamètre d3, de préférence identique audit diamètre d1 desdits orifices de refroidissement et ladite inclinaison en sortie θ3 est de préférence identique à ladite inclinaison θ1 desdits orifices de refroidissement, chacun desdits trous de multi-perforation pouvant présenter un profil variable, de manière à optimiser localement le refroidissement.

Avantageusement, ledit axe géométrique d'entrée dudit trou de multi-perforation est incliné d'un angle θ4 par rapport à ladite normale N à ladite paroi annulaire, dans une direction axiale D d'écoulement des gaz de combustion, ladite inclinaison en entrée θ4 étant de préférence identique à ladite inclinaison θ1 desdits orifices de refroidissement.

De préférence, lesdits trous de multi-perforation se divisent en deux à partir d'une partie coudée pour former deux sorties d'air débouchant côté chaud et la ou les deux sorties d'air débouchant côté chaud desdits trous de multi-perforation peut ou peuvent présenter un diamètre d3 variable en forme de cône.

Selon le mode de réalisation envisagé, lesdits orifices d'admission d'air sont des trous primaires permettant à de l'air circulant dudit côté froid de pénétrer dudit côté chaud afin de créer un mélange air/carburant ou lesdits orifices d'admission d'air sont des trous de dilution permettant à de l'air circulant dudit côté froid de pénétrer dudit côté chaud afin d'assurer la dilution du mélange air/carburant.

La présente invention a également pour objet une chambre de combustion et une turbomachine (ayant une chambre de combustion) comportant une paroi annulaire telle que définie précédemment.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue en coupe longitudinale d'une chambre de combustion de turbomachine dans son environnement ;
- la figure 2 est une vue partielle et en développé de l'une des parois annulaires de la chambre de combustion de la figure 1 selon un mode de réalisation de l'invention ;
- les figures 3 et 4 sont des vues partielles respectivement de dessus et en perspective d'une partie de la paroi annulaire de la figure 2 ; et
- les figures 5 et 6 montrent deux variantes de réalisation des trous de multi-perforation coudés dans l'une des parois annulaires de la chambre de combustion de la figure 1.

### Description détaillée de l'invention

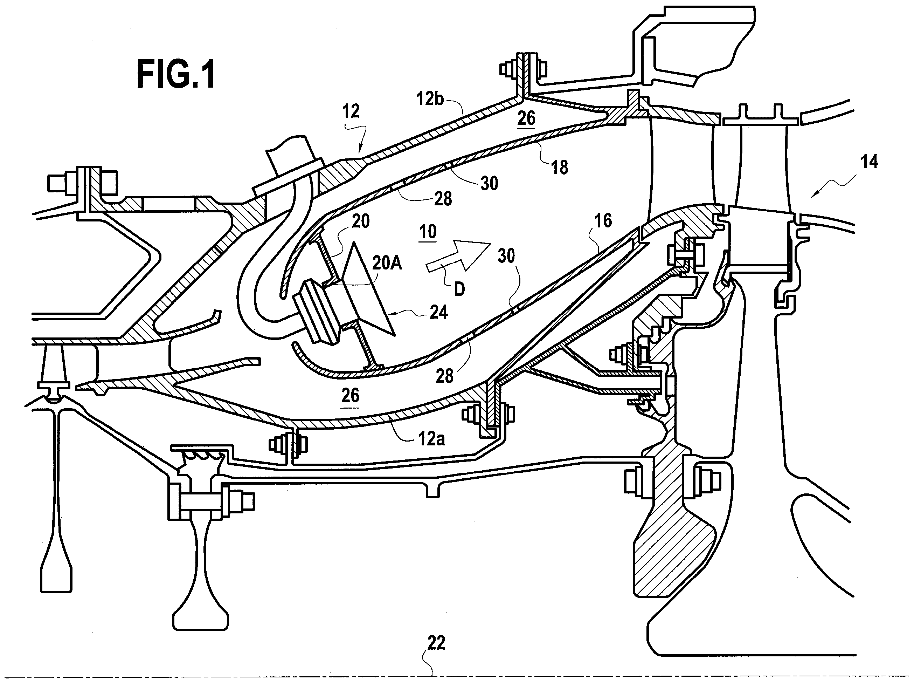

La figure 1 illustre dans son environnement une chambre de combustion 10 pour turbomachine. Une telle turbomachine comporte notamment une section de compression (non représentée) dans laquelle de l'air est comprimé avant d'être injecté dans un carter de chambre 12, puis dans la chambre de combustion 10 montée à l'intérieur de celui-ci. L'air comprimé est introduit via des orifices d'admission d'air dans la chambre de combustion et mélangé à du carburant avant d'y être brûlé. Les gaz issus de cette combustion sont alors dirigés vers une turbine haute-pression 14 disposée en sortie de la chambre de combustion.

La chambre de combustion est de type annulaire. Elle est formée d'une paroi annulaire interne 16 et d'une paroi annulaire externe 18 qui sont réunies en amont par une paroi transversale 20 formant le fond de chambre. Elle peut être directe comme illustrée ou à flux inversé. Dans ce cas, un coude de retour est placé entre la chambre de combustion et le distributeur de turbine.

Les parois annulaires interne 16 et externe 18 s'étendent selon un axe longitudinal légèrement incliné par rapport à l'axe longitudinal 22 de la turbomachine. Le fond de chambre 20 est pourvu d'une pluralité d'ouvertures 20A dans lesquelles sont montés une même pluralité d'injecteurs de carburant 24.

Le carter de chambre 12, qui est formé d'une enveloppe interne 12a et d'une enveloppe externe 12b, ménage avec la chambre de combustion 10 des espaces annulaires 26 dans lequel est admis de l'air comprimé destiné à la combustion, à la dilution et au refroidissement de la chambre.

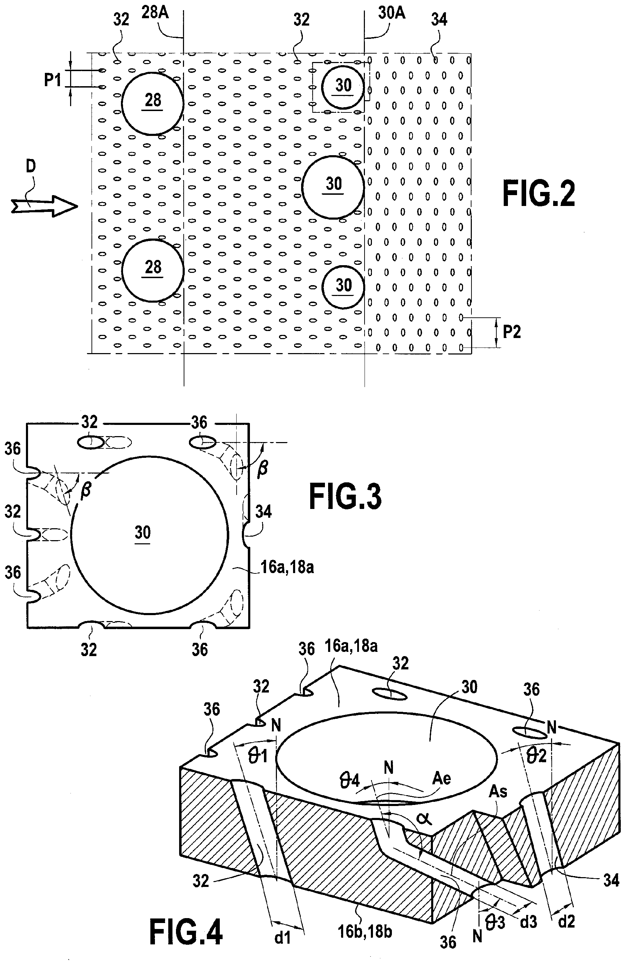

Les parois annulaires interne 16 et externe 18 présentent chacune un côté froid 16a, 18a disposé du côté de l'espace annulaire 26 dans lequel circule l'air comprimé et un côté chaud 16b, 18b tourné vers l'intérieur de la chambre de combustion (voir la figure 4).

La chambre de combustion 10 se divise en une zone dite « primaire » (ou zone de combustion) et une zone dite « secondaire » (ou zone de dilution) située en aval de la précédente (l'aval s'entend par rapport à une direction générale axiale d'écoulement des gaz issus de la combustion du mélange air/carburant à l'intérieur de la chambre de combustion et matérialisée par la flèche D).

L'air qui alimente la zone primaire de la chambre de combustion est introduit par une rangée circonférentielle de trous primaires 28 pratiqués dans les parois annulaires interne 16 et externe 18 de la chambre sur toute la circonférence de ces parois annulaires. Ces trous primaires comportent un bord aval aligné sur une même ligne 28A. Quant à l'air alimentant la zone secondaire de la chambre, il emprunte une pluralité de trous de dilution 30 également formés dans les parois annulaires interne 16 et externe 18 sur toute la circonférence de ces parois annulaires. Ces trous de dilution 30 sont alignés selon une rangée circonférentielle qui est décalée axialement vers l'aval par rapport aux rangées des trous primaires 28 et ils peuvent avoir des diamètres différents avec notamment une alternance de gros et petits trous. Dans la configuration illustrée à la figure 2, ces trous de dilution de diamètres différents présentent toutefois alors un bord aval aligné sur une même ligne 30A.

Afin de refroidir les parois annulaires interne 16 et externe 18 de la chambre de combustion qui sont soumises aux températures élevées des gaz de combustion, il est prévu une pluralité d'orifices de refroidissement 32 (illustrés sur les figures 2 à 4). Dans le cas d'une chambre à flux inversé, le coude de retour est également pourvu de tels orifices.

Ces orifices 32, qui assurent un refroidissement des parois 16, 18 par perçages multiples dits aussi « multi-perforation », sont répartis selon une pluralité de rangées circonférentielles espacées axialement les unes des autres. Ces rangées d'orifices de multi-perforation couvrent de façon générale toute la surface des parois annulaires de la chambre de combustion. Le nombre et le diamètre d1 des orifices de refroidissement 32 sont identiques dans chacune des rangées. Le pas p1 entre deux orifices d'une même rangée est constant et peut être identique ou non pour toutes les rangées. Par ailleurs, les rangées adjacentes d'orifices de refroidissement sont arrangées de façon à ce que les orifices 32 soient disposés en quinconce comme représenté sur la figure 2.

Comme illustré sur la figure 4, les orifices de refroidissement 32 présentent généralement un angle d'inclinaison θ1 par rapport à une normale N à la paroi annulaire 16, 18 au travers de laquelle ils sont percés. Cette inclinaison θ1 permet à l'air empruntant ces orifices de former un film d'air le long du côté chaud 16b, 18b de la paroi annulaire. Par rapport à des orifices non inclinés, elle permet d'augmenter la surface de la paroi annulaire qui est refroidie. En outre, l'inclinaison θ1 des orifices de refroidissement 32 est dirigée de sorte que le film d'air ainsi formé s'écoule dans le sens d'écoulement des gaz de combustion à l'intérieur de la chambre (schématisé par la flèche D).

A titre d'exemple, pour une paroi annulaire 16, 18 réalisée en matériau métallique ou céramique et ayant une épaisseur comprise entre 0,6 et 3,5mm, le diamètre d1 des orifices de refroidissement 32 peut être compris entre 0,3 et 1 mm (préférentiellement entre 0,4 et 0,6 mm), le pas p1 compris entre 1 et 10 mm et leur inclinaison θ1 comprise entre +30° et +70°, typiquement +60°. A titre de comparaison, pour une paroi annulaire ayant les mêmes caractéristiques, les trous primaires 28 et les trous de dilution 30 possèdent un diamètre de l'ordre de 4 à 20 mm.

En outre, pour assurer un refroidissement efficace en aval des trous de dilution, chaque paroi annulaire 16, 18 de la chambre de combustion peut en outre comporter, disposés directement en aval de ces trous de dilution 30 (mais une configuration semblable en aval des trous primaires 28 est aussi possible pour limiter l'élévation du gradient thermique au niveau de ces trous et ainsi éviter la formation de criques) et répartis selon plusieurs rangées circonférentielles depuis l'axe de transition amont 30A, une pluralité d'orifices additionnels de refroidissement 34. Toutefois, au contraire des orifices de refroidissement précédents qui délivrent un film d'air s'écoulant dans la direction axiale D, le film d'air délivré par ces orifices additionnels s'écoule dans une direction perpendiculaire du fait de leur disposition à 90° dans un plan perpendiculaire à cette direction axiale D d'écoulement des gaz de combustion. Cette multi-perforation réalisée perpendiculairement à l'axe de la turbomachine (dans la suite de la description, on parlera de multi-perforation giratoire par opposition à la multi-perforation axiale des orifices de refroidissement) permet de rapprocher ces orifices additionnels des trous de dilution (ou des trous primaires si nécessaire) et donc de limiter l'élévation du gradient thermique au niveau de ces trous.

Les orifices additionnels 34 d'une même rangée présentent un même diamètre d2, de préférence identique au diamètre d1 des orifices de refroidissement 32, sont espacés d'un pas p2 constant qui peut être identique ou non au pas p1 entre les orifices de refroidissement 32 et présentent une inclinaison θ2, de préférence identique à l'inclinaison θ1 des orifices de refroidissement 32 mais disposée dans un plan perpendiculaire. Toutefois, ces caractéristiques des orifices additionnels 34 peuvent, tout en restant dans les plages de valeurs définies précédemment, être sensiblement différentes de celles des orifices de refroidissement 32, c'est-à-dire que l'inclinaison θ2 des orifices additionnels d'une même rangée par rapport à une normale N à la paroi annulaire 16, 18 peut être différente de celle θ1 des orifices de refroidissement, et le diamètre d2 des orifices additionnels d'une même rangée peut être différent de celui d1 des orifices de refroidissement 32.

Selon l'invention, un refroidissement optimal autour des trous de dilution comme des trous primaires est obtenu en utilisant la pression dynamique côté froid (entre carter et paroi de la chambre) tout en conservant l'effet de la giration côté chaud. Pour ce faire, il est prévu de disposer dans les zones à fort gradient thermique telles que les trous primaire ou de dilution, des trous de multi-perforation 36 coudés d'un angle α supérieur à 90° dans la paroi de la chambre, de manière à ce qu'ils soient alimentés par la pression totale de l'air côté froid, comme pour une multi-perforation axiale, tout en débouchant côté chaud comme en matière de multi-perforation giratoire. En effet, comme il est connu, dans le cas de la multi-perforation giratoire à 90°, les trous sont alimentés par la pression statique de l'air entre le carter 12 et la paroi de chambre alors que dans le cas de la multi-perforation axiale les trous sont alimentés par la pression totale de l'air. Le fait d'être alimenté par la pression statique implique que l'on n'utilise pas la pression dynamique de l'air (P totale - P statique) entre le carter et la paroi de la chambre. Or, cette pression dynamique est d'autant plus grande au niveau des trous primaires et des trous dilution.

L'angle α typiquement compris entre 90° et 170° est pris entre un axe géométrique d'entrée Ae et un axe géométrique de sortie As du trou de multi-perforation, l'axe géométrique de sortie (axe du trou côté paroi chaude) étant incliné d'un angle θ3 par rapport à la normale N à la paroi annulaire mais dans un plan lui-même incliné d'un angle β selon une direction dite de giration au plus perpendiculaire à la direction axiale D d'écoulement des gaz de combustion. Typiquement cet angle de giration β est compris entre 50° et 90°.

Ces trous de multi-perforation 36 présentent un diamètre d3, de préférence identique au diamètre d1 des orifices de refroidissement 32 et l'inclinaison en sortie θ3 est de préférence identique à l'inclinaison θ1 des orifices de refroidissement 32. De même, l'axe géométrique d'entrée (axe du trou côté froid) peut être droit (parallèle à la normale N) ou de préférence présenter une inclinaison θ4 (de préférence identique à l'inclinaison θ1 des orifices de refroidissement 32) par rapport à cette normale dans la direction axiale D d'écoulement des gaz de combustion. Toutefois, ces différentes caractéristiques peuvent, tout en restant dans les plages de valeurs définies précédemment pour les orifices de refroidissement 32, être sensiblement différentes.

On pourra noter, que dans ces zones à fort gradient thermique, le profil de chaque trou de multi-perforation 36 peut avantageusement être variable, c'est-à-dire avec un diamètre d3, des inclinaisons θ3 et θ4 (donc un angle α) et un angle de giration β différent d'un trou à l'autre, de manière à optimiser localement le refroidissement.

On notera également, que pour un trou de diamètre 0.4 mm, la surface latérale d'échange (surface mouillée par l'air qui passe dans le trou) est identique pour les 3 types de trous de multi-perforation. Ainsi, on peut déterminer cette surface latérale d'échange S par la formule suivante : S = π *d3* L (avec L la longueur du trou)
Soit pour un trou 32 droit axial S égale à 3 mm²,
Soit pour un trou 34 droit giratoire à 90° S égale à 3.04 mm², et
Soit pour un trou 36 coudé à 90° S égale à 3.06 mm².
Le trou coudé ne dégrade donc pas le refroidissement de la paroi par la convection forcée de l'air circulant à travers lui.

Avec la multi-perforation composée de trous coudés, l'utilisation de la pression dynamique de l'air circulant entre le carter et la paroi de la chambre à combustion qui n'était pas utilisée avec la multi-perforation giratoire, permet de refroidir simplement et de façon beaucoup plus efficace autour des trous primaires et de dilution par un placement judicieux de ces trous coudés.

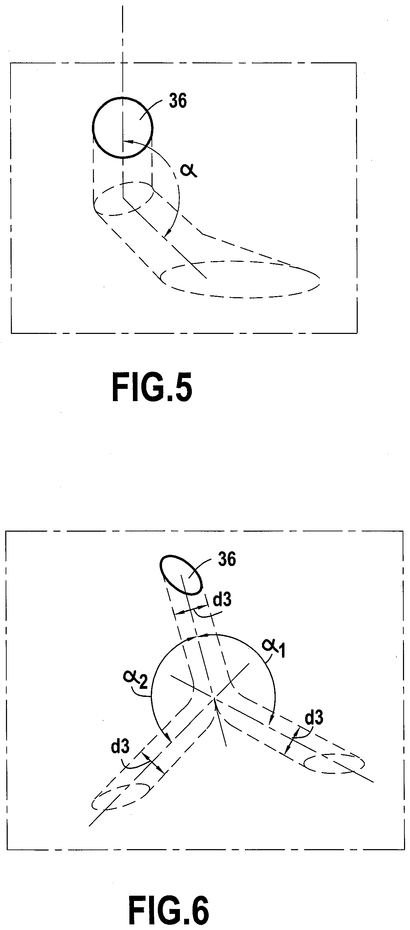

Selon une variante de réalisation illustrée à la figure 5, la sortie d'air du trou de multi-perforation 36 débouchant côté chaud peut avoir un diamètre d3 variable en forme de cône et donc ne plus être constant comme précédemment mais avec le diamètre d3 augmentant en se rapprochant de cette sortie d'air. De même, comme le montre la figure 6, la sortie d'air débouchant côté chaud peut, après la partie coudée, se diviser en deux parties de manière à augmenter la surface d'échange entre l'air de refroidissement et la paroi. Le diamètre d3 sera de préférence identique tout au long du trou de multi-perforation 36 mais les angles α1 et α2 entre l'axe géométrique d'entrée et les axes géométriques de sortie respectifs des deux parties après le coude pourront être identiques comme illustrés ou bien encore différents. Toutefois, comme précédemment, les sorties d'air formant la partie terminale du trou peuvent aussi présenter un diamètre variable.

## Revendications

1. Paroi annulaire (16, 18) de chambre de combustion (10) de turbomachine, comportant entre un côté froid (16a, 18a) et un côté chaud (16b, 18b) :
une pluralité d'orifices d'admission d'air (28, 30) répartis selon au moins une rangée circonférentielle pour permettre à de l'air circulant dudit côté froid de pénétrer dudit côté chaud, lesdits orifices d'admission d'air créant autour d'eux des zones à fort gradient thermique, et
une pluralité d'orifices de refroidissement (32) pour permettre à l'air circulant dudit côté froid de pénétrer dudit côté chaud afin de former un film d'air de refroidissement le long de ladite paroi annulaire, lesdits orifices de refroidissement étant répartis selon une pluralité de rangées circonférentielles espacées axialement les unes des autres et les axes géométriques de chacun desdits orifices de refroidissement étant inclinés,
dans une direction axiale D d'écoulement des gaz de combustion, d'un angle d'inclinaison θ1 par rapport à une normale N à ladite paroi annulaire,
ladite paroi annulaire étant **caractérisée en ce qu'**elle comporte en outre, dans lesdites zones à fort gradient thermique, des trous de multi-perforation (36) coudés d'un angle α supérieur à 90°, ledit angle α étant pris entre un axe géométrique d'entrée Ae et un axe géométrique de sortie As dudit trou de multi-perforation, ledit axe géométrique de sortie dudit trou de multi-perforation étant incliné d'un angle θ3 par rapport à ladite normale N à ladite paroi annulaire au travers de laquelle lesdits trous de multi-perforation coudés sont percés, dans une direction dite de giration au plus perpendiculaire à ladite direction axiale D d'écoulement des gaz de combustion.

2. Paroi selon la revendication 1, **caractérisée en ce que** ledit angle α est compris entre 90° et 170°.

3. Paroi selon la revendication 1, **caractérisée en ce que** ladite direction de giration est inclinée par rapport à ladite direction axiale D d'écoulement des gaz de combustion d'un angle β compris entre 50° et 90°.

4. Paroi selon l'une quelconque des revendications 1 à 3, **caractérisée en ce que** lesdits trous de multi-perforation présentent un diamètre d3, de préférence identique audit diamètre d1 desdits orifices de refroidissement et ladite inclinaison en sortie θ3 est de préférence identique à ladite inclinaison θ1 desdits orifices de refroidissement.

5. Paroi selon la revendication 4, **caractérisée en ce que** ledit axe géométrique d'entrée dudit trou de multi-perforation est incliné d'un angle θ4 par rapport à ladite normale N à ladite paroi annulaire, dans une direction axiale D d'écoulement des gaz de combustion, ladite inclinaison en entrée θ4 étant de préférence identique à ladite inclinaison θ1 desdits orifices de refroidissement.

6. Paroi selon la revendication 4 ou la revendication 5, **caractérisée en ce que** chacun desdits trous de multi-perforation présente un profil variable, de manière à optimiser localement le refroidissement.

7. Paroi selon l'une quelconque des revendications 1 à 6, **caractérisée en ce que** lesdits trous de multi-perforation se divisent en deux à partir d'une partie coudée pour former deux sorties d'air débouchant côté chaud.

8. Paroi selon l'une quelconque des revendications 1 à 7, **caractérisée en ce que** la ou les deux sorties d'air débouchant côté chaud desdits trous de multi-perforation présente(nt) un diamètre d3 variable en forme de cône.

9. Paroi selon la revendication 1, **caractérisée en ce que** lesdits orifices d'admission d'air sont des trous primaires (28) permettant à de l'air circulant dudit côté froid de pénétrer dudit côté chaud afin de créer un mélange air/carburant.

10. Paroi selon la revendication 9, **caractérisée en ce que** lesdits orifices d'admission d'air sont des trous de dilution (30) permettant à de l'air circulant dudit côté froid de pénétrer dudit côté chaud afin d'assurer la dilution du mélange air/carburant.

11. Chambre de combustion (10) de turbomachine, comportant au moins une paroi annulaire (16, 18) selon l'une quelconque des revendications 1 à 10.

12. Turbomachine comportant une chambre de combustion (10) ayant au moins une paroi annulaire (16, 18) selon l'une quelconque des revendications 1 à 10.

## Patentansprüche

1. Ringwand (16, 18) einer Brennkammer (10) einer Turbomaschine, umfassend, zwischen einer kalten Seite (16a, 18a) und einer heißen Seite (16b, 18b):
eine Vielzahl von Lufteinlassöffnungen (28, 30), die entlang wenigstens einer umlaufenden Reihe verteilt sind, um Luft, welche auf der kalten Seite strömt, zu ermöglichen, auf die heiße Seite zu gelangen, wobei die Lufteinlassöffnungen um sich herum Bereiche mit hohem Wärmegradient bilden, und
eine Vielzahl von Kühlöffnungen (32), um Luft, welche auf der kalten Seite strömt, zu ermöglichen, auf die heiße Seite zu gelangen, um einen Kühlluftfilm entlang der Ringwand zu bilden, wobei die Kühlöffnungen entlang einer Vielzahl von axial voneinander beabstandeten umlaufenden Reihen verteilt sind, und wobei die Geometrieachsen einer jeden der Kühlöffnungen in einer axialen Strömungsrichtung D der Verbrennungsgase um einen Neigungswinkel θ1 in Bezug auf eine Normale N auf die Ringwand geneigt sind,
wobei die Ringwand **dadurch gekennzeichnet ist, dass** sie ferner in den Bereichen mit hohem Wärmegradient Mehrfachperforationslöcher (36) umfasst, die um einen Winkel α größer als 90° abgewinkelt sind, wobei der Winkel α zwischen einer geometrischen Eingangsachse Ae und einer geometrischen Ausgangsachse As des Mehrfachperforationsloches genommen ist, wobei die geometrische Ausgangsachse des Mehrfachperforationsloches um einen Winkel θ3 in Bezug auf die Normale N auf die Ringwand, durch die hindurch die abgewinkelten Mehrfachperforationslöcher ausgebildet sind, in einer sogenannten Drehrichtung höchstens senkrecht zu der axialen Strömungsrichtung D der Verbrennungsgase geneigt ist.

2. Wand nach Anspruch 1, **dadurch gekennzeichnet, dass** der Winkel α zwischen 90° und 170° beträgt.

3. Wand nach Anspruch 1, **dadurch gekennzeichnet, dass** die Drehrichtung gegenüber der axialen Strömungsrichtung D der Verbrennungsgase um einen Winkel β zwischen 50° und 90° geneigt ist.

4. Wand nach einem der Ansprüche 1 bis 3, **dadurch gekennzeichnet, dass** die Mehrfachperforationslöcher einen Durchmesser d3 aufweisen, der vorzugsweise mit dem Durchmesser d1 der Kühlöffnungen identisch ist, und die Ausgangsneigung θ3 vorzugsweise mit der Neigung θ1 der Kühlöffnungen identisch ist.

5. Wand nach Anspruch 4, **dadurch gekennzeichnet, dass** die geometrische Eingangsachse des Mehrfachperforationsloches um einen Winkel θ4 in Bezug auf die Normale N auf die Ringwand in einer axialen Strömungsrichtung D der Verbrennungsgase geneigt ist, wobei die Eingangsneigung θ4 vorzugsweise mit der Neigung θ1 der Kühlöffnungen identisch ist.

6. Wand nach Anspruch 4 oder Anspruch 5, **dadurch gekennzeichnet, dass** ein jedes der Mehrfachperforationslöcher ein veränderliches Profil aufweist, um die Kühlung lokal zu optimieren.

7. Wand nach einem der Ansprüche 1 bis 6, **dadurch gekennzeichnet, dass** sich die Mehrfachperforationslöcher ausgehend von einem abgewinkelten Teil zweiteilen, um zwei auf der heißen Seite ausmündende Luftauslässe zu bilden.

8. Wand nach einem der Ansprüche 1 bis 7, **dadurch gekennzeichnet, dass** der oder die beiden Luftauslässe, welche(r) auf der heißen Seite der Mehrfachperforationslöcher ausmündet/ausmünden, einen veränderlichen kegelförmigen Durchmesser d3 aufweist/aufweisen.

9. Wand nach Anspruch 1, **dadurch gekennzeichnet, dass** die Lufteinlassöffnungen Primärlöcher (28) sind, die Luft, welche auf der kalten Seite strömt, ermöglichen, auf die heiße Seite zu gelangen, um ein Luft/Kraftstoff-Gemisch zu erzeugen.

10. Wand nach Anspruch 9, **dadurch gekennzeichnet, dass** die Lufteinlassöffnungen Verdünnungslöcher (30) sind, die Luft, welche auf der kalten Seite strömt, ermöglichen, auf die heiße Seite zu gelangen, um die Verdünnung des Luft/Kraftstoff-Gemischs sicherzustellen.

11. Brennkammer (10) einer Turbomaschine, die wenigstens eine Ringwand (16, 18) nach einem der Ansprüche 1 bis 10 umfasst.

12. Turbomaschine, umfassend eine Brennkammer (10) mit wenigstens einer Ringwand (16, 18) nach einem der Ansprüche 1 bis 10.

## Claims

1. An annular turbine engine combustion chamber wall (16, 18) comprising, between a cold side (16a, 18a) and a hot side (16b, 18b):
- a plurality of air admission orifices (28, 30) distributed along at least one circumferential row to enable the air flowing on said cold side to penetrate to said hot side, said air admission orifices creating around them zones of steep temperature gradient; and
- a plurality of cooling orifices (32) to enable the air flowing on said cold side to penetrate to said hot side in order to form a film of cooling air along said annular wall, said cooling orifices being distributed in a plurality of circumferential rows that are axially spaced apart from one another, and the axes of each of said cooling orifices being inclined in an axial flow direction D of the combustion gas at an angle of inclination θ1 relative to a normal N to said annular wall;
said annular wall being **characterized in that** it further comprises, in said zones of steep temperature gradient, multi-perforation holes (36) having respective bends of an angle α greater than 90°, said angle α being measured between an inlet axis Ae and an outlet axis As of said multi-perforation hole, said outlet axis of said multi-perforation hole being inclined at an angle θ3 relative to said normal N to said annular wall through which said multi-perforation holes with bends are formed, in a "gyration" direction that is at most perpendicular to said axial flow direction D of the combustion gas.

2. A wall according to claim 1, **characterized in that** said angle α lies in the range 90° to 170°.

3. A wall according to claim 1, **characterized in that** said gyration direction is inclined relative to said axial flow direction D of the combustion gas at an angle β lying in the range 50° to 90°.

4. A wall according to any one of claims 1 to 3, **characterized in that** said multi-perforation holes present a diameter d3, preferably identical to said diameter d1 of said cooling orifices, and said outlet angle of inclination θ3 is preferably identical to said angle of inclination θ1 of said cooling orifices.

5. A wall according to claim 4, **characterized in that** said inlet axis of said multi-perforation hole is inclined at an angle θ4 relative to said normal N to said annular wall in an axial flow direction D of the combustion gas, said inlet angle of inclination θ4 preferably being identical to said angle of inclination θ1 of said cooling orifices.

6. A wall according to claim 4 or claim 5, **characterized in that** each of said multi-perforation holes presents a varying profile so as to optimize cooling locally.

7. A wall according to any one of claims 1 to 6, **characterized in that** said multi-perforation holes split into two after a bend portion so as to form two air outlets opening out into the hot side.

8. A wall according to any one of claims 1 to 7, **characterized in that** the or both air outlet(s) opening out into the hot side of each of said multi-perforation holes present(s) a varying diameter d3 in the shape of a cone.

9. A wall according to claim 1, **characterized in that** said air admission orifices are primary holes (28) enabling the air flowing on said cold side to penetrate to said hot side in order to create an air/fuel mixture.

10. A wall according to claim 9, **characterized in that** said air admission orifices are dilution holes (30) enabling the air flowing on said cold side to penetrate to said hot side in order to dilute the air/fuel mixture.

11. A turbine engine combustion chamber (10) having at least one annular wall (16, 18) according to any one of claims 1 to 10.

12. A turbine engine including a combustion chamber (10) having at least one annular wall (16, 18) according to any one of claims 1 to 10.
